# EUROPÄISCHE PATENTSCHRIFT

(11) **EP 3 331 842 B1**
(45) Veröffentlichungstag und Bekanntmachung des Hinweises auf die Patenterteilung: **04.10.2023**
(21) Anmeldenummer: 16757161.1
(22) Anmeldetag: 01.08.2016
(51) Int. Cl.: C05F 3/06, A01C 23/04, A01C 3/00

(54) **ANALYSE-MISCH-VORRICHTUNG ZUR BEREITSTELLUNG EINER GÜLLEMISCHUNG**
ANALYZING AND MIXING DEVICE FOR PROVIDING A LIQUID-MANURE MIXTURE
DISPOSITIF D'ANALYSE ET DE MÉLANGE POUR PRÉPARER UN MÉLANGE DE FUMIER

(30) Priorität: 04.08.2015 DE 202015005512 U
(43) Veröffentlichungstag der Anmeldung: 13.06.2018
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes
(86) Internationale Anmeldenummer: PCT/EP2016/068269
(87) Internationale Veröffentlichungsnummer: WO 2017/021345

(56) Entgegenhaltungen:
- EP-A1- 2 272 315
- DE-A1- 10 206 452
- DE-U1-202008 000 955
- DATABASE WPI Week 201259 Thomson Scientific, London, GB; AN 2012-C72806 XP002763402, -& KR 2012 0014378 A (KYONGSANGBUK-DO AGRIC TECHNOLOGY ADMIN) 17. Februar 2012 (2012-02-17)

## Beschreibung

Die Erfindung betrifft eine Analyse-Misch-Vorrichtung zur Bereitstellung einer Güllemischung mit einer vorbestimmten chemischen Zusammensetzung.

Landwirtschaftliche Güllen, auch Flüssigmist genannt, sind komplexe Flüssig-Feststoff-Gemische aus tierischem Kot, Harn und Einstreu-Anteilen, sowie Spül- und Reinigungswasser. Sie werden als landwirtschaftlicher Dünger eingesetzt und entstammen im Allgemeinen der Schweine- oder Rindermasthaltung, aber auch der Geflügelhaltung sowie aus Biogasanlagen.

Als komplexe Mehrphasensysteme unterscheiden sich Güllen je nach Tierart in ihrer chemischen Zusammensetzung voneinander; auch sind sie von der Tierernährung und der Tierhaltung abhängig. Zudem finden in den komplexen Gemischen verschiedenster chemischer Substanzen und Mikroorganismen Wechselwirkungen mit der umgebenden Gasatmosphäre sowie chemische, physikalisch-chemische und biochemische Reaktionen statt, die insbesondere die chemische Zusammensetzung ständig verändern. Lediglich beispielhaft sei hier die enzymatische Umsetzung von Harnstoff in Ammoniak und Kohlendioxid genannt, die einen Verlust des Ammonium-Stickstoffs bei der Lagerung nach sich zieht, so dass dieser flüchtige Anteil als Nährstoff für die Düngung dann nicht mehr zur Verfügung steht.

Wichtige mineralische Düngestoffe in den Güllen sind Natrium-, Kalium-, Magnesium-, Calcium-, Eisen-, Phosphat- und Pyridionen; neben den anorganischen Salzen enthalten sie vor allem Harnstoff und Harnsäure und somit gebundenen Stickstoff. So liegt beispielsweise die Konzentration von gelöstem Ammonium zwischen einem und vier Gramm pro Liter Gülle. Die Gülle bzw. die Güllen werden in der Regel bis zu ihrer Ausbringung auf landwirtschaftliche Flächen in Senkgruben oder anderen Güllevorratsbehälter gelagert. Gegebenenfalls wird die Gülle in dem Vorratsbehälter von Zeit zu Zeit durch Rühren homogenisiert, um die dauerhafte Bildung von Sink- und Schwimmschichten zu vermeiden.

Die deutsche Düngeverordnung (DüV) aber auch der Nitratrichtlinie (91/676/EWG), die eine Verunreinigung des Grund- und des Oberflächenwassers durch Nitrate aus der Landwirtschaft vor allem durch Düngung verhindern soll, regeln die Anwendung von Düngemitteln, Bodenhilfsstoffen und dergleichen für landwirtschaftlich genutzte Bodenflächen. So muss beispielsweise die Düngebedarfsermittlung so erfolgen, dass ein Gleichgewicht zwischen dem voraussichtlichen Nährstoffbedarf und der Nährstoffversorgung gewährleistet ist. Zudem dürfen bestimmte Inhaltsstoffe, wie beispielsweise Stickstoff, Phosphat oder Nitrat nur in einer bestimmten Höchstmenge (kg) pro Hektar (ha) und Jahr (a) ausgebracht werden.

Für eine Düngebedarfsermittlung ist es daher notwendig, zunächst den Nährstoffbedarf für ein pflanzenbaulich genutztes Ackerland und anschließend den Nährstoffgehalt der bei dem jeweiligen Landwirt gerade vorrätig gehaltenen Gülle zu bestimmen.

Aus der DE 103 18 942 A1 ist ein Verfahren und Fahrzeug zur Ausbringung von Gülle bekannt, bei dem ein Sensor die Inhaltsstoffe der auszubringenden Gülle ermittelt und mit vorgegeben Inhaltsstoffen vergleicht. Die Ermittlung und der Vergleich erfolgt dabei in Echtzeit, wodurch Bauelemente, wie beispielsweise Sensor und Verteileinrichtung sehr großen Belastungen, insbesondere mechanischen Belastungen wie beispielsweise Schwingungen und Rütteleffekten während der Ausbringungs-Fahrt ausgesetzt sind. Außerdem können bei Verstopfungen am Verteiler Druckprobleme auftreten, beispielsweise durch Pulsation am Sensor, die die Messungen negativ beeinflussen.

Aus der DE 20 2008 000 955 U1 ist eine Vorrichtung zum Optimieren der Ausbringmenge von in Gülle enthaltenen Inhaltsstoffen auf zu düngenden Boden mit Hilfe eines Gülle-Tankfahrzeugs und einen Sensor für die Analyse der auszubringenden Gülle bezüglich ihrer Inhaltsstoffe.

Aus der EP 2 272 315 A1 ist eine Vorrichtung zur Spektralanalyse von Gülle mittels eines NIR-Sensors und ein Beimischen einer Säure zur Gülle.

Die DE 20 2006 015 589 U1 beschreibt ein Fahrzeug zur Ausbringung von Gülle das dadurch gekennzeichnet ist, dass ein Sensor im Befüllungsbereich des Fahrzeugvorratsbehälters angeordnet ist. Damit sind die Inhaltsstoffe der Gülle in dem Vorratsbehälter bekannt. Eine Verteilervorrichtung in dem Fahrzeug wird über ein Ventil auf Basis von Steuerdaten (Ist-Soll-Datenabgleich) so angesteuert, dass die pro Flächeneinheit auszubringende Menge an Gülle den Vorgaben entspricht. Die Zusammensetzung der Güllemischung in dem Ausbringfahrzeug ist zwar bekannt, jedoch kann der Landwirt lediglich über die Verteilervorrichtung und/oder die Fahrgeschwindigkeit des Ausbringfahrzeuges Einfluss auf die auszubringende Menge an dieser speziellen Güllemischung nehmen. Weder die Verteilervorrichtung noch die Fahrgeschwindigkeit weder in Alleinstellung noch in Kombination sind jedoch zuverlässige Stellglieder für eine bedarfsgerechte Ausbringung an Nährstoffen. So lässt sich in der Regel die Verteilervorrichtung nur grob einstellen und die Fahrgeschwindigkeit auf unebenem Gelände schwer konstant halten.

Der Erfindung liegt die Aufgabe zugrunde, eine Vorrichtung der eingangs beschriebenen Art zu schaffen, die die genannten Nachteile vermeidet und eine verbesserte Nährstoffversorgung für eine landwirtschaftlich genutzte Bodenfläche gewährleistet. Aufgabe der vorliegenden Erfindung ist es auch die Ausbringung von Gülle unter Berücksichtigung der vom Gesetzgeber geforderten Bestimmungen, insbesondere im Hinblick auf die Konzentration der Inhaltsstoffe, zu optimieren.

Diese Aufgabe wird erfindungsgemäß durch eine Analyse-Misch-Vorrichtung mit den Merkmalen des unabhängigen Patentanspruchs 1 gelöst. Vorteilhafte Weiterbildungen und Ausgestaltungen der Erfindung sind in Unteransprüchen beschrieben.

Eine erfindungsgemäße Analyse-Misch-Vorrichtung umfasst einen ersten Vorratsbehälter für Gülle, eine erste Fördereinrichtung zum Fördern der Gülle in eine Mischkammer, zumindest einen zweiten Vorratsbehälter für einen beizumischenden Feststoff, eine beizumischende Flüssigkeit oder Suspension und eine zweite Fördereinrichtung zum Fördern des Feststoffs, der Flüssigkeit oder Suspension in die Mischkammer.

Die Analyse-Misch-Vorrichtung ist erfindungsgemäß gekennzeichnet durch einen Sensor zur kontinuierlichen oder diskreten chemischen Analyse der Gülle auf dem Förderweg zu der Mischkammer und eine Recheneinrichtung zur Berechnung und gegebenenfalls Steuerung einer beizmischenden Menge und/oder eines Volumens eines Feststoffs, einer Suspension oder einer Flüssigkeit.

Gegenüber den bekannten Lösungsversuchen basiert die Erfindung auf dem Gedanken, eine Güllemischung mit einer vorbestimmten chemischen Zusammensetzung bereitzustellen, die dann ohne komplizierte und störungsanfällige Regelungstechnik an und/oder in dem Gülleausbringfahrzeug auf pflanzenbaulich genutztem Ackerland ausgebracht wird. Dafür kann die Güllemischung mit der vorbestimmten chemischen Zusammensetzung zunächst in der Mischkammer, in einem stromab der Mischkammer angeordneten Vorratsbehälter, oder in einem stromab der Mischkammer bereitgestellten Gülleausbringfahrzeug bereitgestellt werden.

Unter der chemischen Zusammensetzung der Güllemischung wird im Rahmen dieser Erfindung die Konzentration beispielsweise an Alkali- und Erdalkalimetallen, insbesondere an Kalium, Calcium und/oder Magnesium, insbesondere in Form ihrer anorganischen Salze, und die Konzentration an Stickstoff, Phosphor und/oder Schwefel gebunden oder frei, in Kilogramm (kg) pro Kubikmeter (cbm) verstanden. Selbstverständlich können die Konzentrationen auch in Gramm pro Kilogramm, beispielsweise aufgeteilt in als Gesamtstickstoffgehalt und Ammoniumgehalt angegeben werden.

Da sich die chemische Zusammensetzung des komplexen Mehrphasensystems ständig verändert, umfasst die erfindungsgemäße Analyse-Misch-Vorrichtung vorzugsweise ein Gülleausbringfahrzeug zur Aufnahme und Ausbringung der bereitgestellten Güllemischung. Indem die Güllemischung mit der vorbestimmten chemischen Zusammensetzung zeitnah ausgebracht wird, wird gewährleistet, dass die Konzentration der Inhaltsstoffe den Vorgaben entspricht, und somit der Nährstoffbedarf der jeweiligen Kulturpflanze tatsächlich gedeckt ist. Ein weiterer Vorteil dieser Anordnung ist, dass in einem, insbesondere vollständig befüllten Gülleausbringfahrzeug, kaum Wechselwirkungen der Gülle mit der umgebenden Gasatmosphäre stattfinden.

Als Vorratsbehälter für Gülle kommen Senkgruben, Güllegruben oder andere Güllebehälter in Frage. Gegebenenfalls wird die Gülle in dem Vorratsbehälter von Zeit zu Zeit durch Rühren homogenisiert um die dauerhafte Bildung von Sink- und Schwimmschichten zu vermeiden.

Über eine erste Fördereinrichtung wird die Gülle aus dem ersten Vorratsbehälter in eine Mischkammer gefördert. Die Fördereinrichtung umfasst neben einer Rohrleitung, die gegebenenfalls verschieblich ausgeführt ist, eine Pumpe oder eine Absaugeinrichtung. Die Mischkammer, vorzugsweise ein Güllefass oder ein Gülletransportfahrzeug, dient zum gegebenenfalls kontinuierlichen Beimischen eines Feststoffs, einer Flüssigkeit oder Suspension, um stromab des Sensors eine Güllemischung mit einer vorbestimmten chemischen Zusammensetzung, bereitzustellen. Die Mischkammer kann aber auch als Vorratsbehälter, beispielsweise als Güllegrube, ausgelegt sein. Gegebenenfalls ist die Mischkammer auch ein Teilabschnitt in einer Förderleitung, in dem die Gülle und ein beizumischender Feststoff, eine beizumischende Flüssigkeit oder Suspension stromauf des Güllefasses zusammentreffen.

Die erste Fördereinrichtung ist in der Regel eine Pumpe, insbesondere eine als Kreiselpumpe ausgebildete Güllepumpe, beispielsweise mit Zapfwellenantrieb. Denkbar ist auch, dass die Fördereinrichtung von dem Gülleausbringfahrzeug gebildet wird, indem dieses als so genanntes Vakuumfass ausgebildet ist, und die Gülle über ein Leitungssystem aus dem ersten Vorratsbehälter aufgrund des im Tank herrschenden Unterdrucks abgesaugt und so in den Vakuumtank gefördert wird.

Der Sensor zur chemischen Analyse der Gülle ist in vorteilhafter Weise stromauf der Mischkammer angeordnet. Der Sensor ist ausgebildet und eingerichtet, um die aus dem ersten Vorratsbehälter geförderte Gülle zu analysieren. Vorzugsweise handelt es sich dabei um einen Durchfluss-Nahinfrarotspektroskopie NIR-Sensor oder einen RAMAN-Sensor. Für NIR-Sensor-Messungen, beispielsweise von Stickstoff, sind die Wellenlängen 1320 - 1390 nm, 2000 - 2125 nm und 2175 -2325 nm zu verwenden. Der Sensor liefert vorzugsweise kontinuierlich und in Echtzeit Daten über die chemische Zusammensetzung der aus dem ersten Vorratsbehälter geförderten Gülle. Selbstverständlich ist es auch möglich die Analyse chargenweise beispielsweise immer nach einem bestimmten Fördervolumen durchzuführen.

Über die Leistung der Fördereinrichtung, insbesondere das Schluckvolumen der Pumpe ist es möglich das geförderte Volumen zu bestimmen. Es kann aber auch vorteilhaft sein einen Durchflussmesser in den Förderweg einzubringen, um neben den Inhaltsstoffen der Güllemischung auch das geförderte Volumen exakt bestimmen zu können. Daneben dient das Fassungsvolumen der Mischkammer, insbesondere des Güllefasses oder des Gülletransportfahrzeuges als Maßeinheit.

Die zumindest zweite Fördereinrichtung zum Fördern eines Feststoffs, einer Flüssigkeit oder Suspension wird mittels einer Recheneinrichtung durch Verarbeitung der Analysedaten und des Fördervolumens manuell oder automatisch so in Gang gesetzt und angehalten, dass eine Güllemischung mit einer vorbestimmten chemischen Zusammensetzung bereitgestellt wird. Die Bereitstellung erfolgt dabei in einem stromab des Sensors angeordneten Vorratsbehälter, oder in einem stromab des Sensors bereitgestellten Gülleausbringfahrzeug.

In dem zumindest zweiten Vorratsbehälter für einen beizumischenden Feststoff, eine beizumischende Flüssigkeit oder Suspension kann sich zusätzlich auch Wasser befinden. Durch das Beimischen von Brauch- oder Trinkwasser wird die Gülle zunächst nur verdünnt, was sich durch die Verringerung der Viskosität der Gülle im Allgemeinen immer als vorteilhaft erweist. Dadurch wird neben einem geringeren mechanischen Aufwand beim Pumpen und Rühren der Gülle auch eine raschere Aufnahme der Nährstoffe in den Boden bewirkt, wodurch die Pflanzenverträglichkeit steigt und die Emissionsverluste an Ammoniak und Schwefelwasserstoff verringert werden.

Durch die Verdünnung der Gülle mit Wasser kann auch eine Güllemischung mit einer vorbestimmten chemischen Zusammensetzung bereitgestellt werden. Insbesondere kann dadurch die Konzentration der Inhaltsstoffe pro Kubikmeter verringert werden. Die Konzentration kann dabei in kg/cbm, Gew.-% oder g/kg Trockenmasse etc. angegeben sein; sie ist in jedem Fall so zu verstehen, dass alle Werte, die im Bereich der dem Fachmann bekannten jeweiligen Messgenauigkeit liegen, mit umfasst sind. Da es sich jedoch um eine Messung im Fluss handelt, werden von der Recheneinrichtung Konzentrationen vorzugsweise in kg/cbm oder kg/kl (Kiloliter) verarbeitet.

In dem zumindest zweiten Vorratsbehälter befindet sich erfindungsgemäß ein Feststoff. So kann die Gülle aus dem ersten Vorratsbehälter, beispielsweise für eine Kulturpflanze in einer ersten Hochwachstumsphase zu wenig Kalium enthalten. Durch das Beimischen von Kalium, insbesondere in Form eines Kaliumsalzes, wie zum Beispiel Kaliumsulfat, -nitrat oder -phosphat, zu der Gülle mittels der erfindungsgemäßen Analyse-Misch-Vorrichtung ist eine Gülle mit einer vorbestimmten chemischen Zusammensetzung erhältlich, die den Nährstoffbedarf dieser speziellen Kulturpflanze in dieser speziellen Wachstumsphase deckt.

Erfindungsgemäß kann der Feststoff auch Stickstoff oder Phosphor, insbesondere in Form ihrer Salze, wie beispielsweise Ammoniumsulfat oder Diammoniumhydrogenphosphat umfassend in dem zweiten Vorratsbehälter gelagert sein.

Erfindungsgemäß umfasst die Analyse-Misch-Vorrichtung umfasst neben dem zumindest zweiten Vorratsbehälter weitere Vorratsbehälter für weitere beizumischende Feststoffe, oder einen Voll- oder Mehrnährstoffdünger.

Erfindungsgemäß befindet sich in dem zumindest einen zweiten Vorratsbehälter (8) und den weiteren Vorratsbehältern (8, 8', 8") je ein Feststoff zum Beimischen, der Stickstoff, Phosphor oder Kalium, insbesondere in Form ihrer Salze, oder einen Voll- oder Mehrnährstoffdünger, umfasst.

Durch die Bereitstellung weiterer Vorratsbehälter, insbesondere für Stickstoff, Phosphor und Kalium kann der Nährstoffgehalt, und damit die chemische Zusammensetzung der bei dem jeweiligen Landwirt gerade vorrätig gehaltenen Gülle in vorteilhafter Weise noch exakter eingestellt werden. Es ist auch denkbar bestimmte Mischungen von gängigen anorganischen Salzen, die als Düngemittel Verwendung finden, so genannte Voll- oder Mehrnährstoffdünger in einem Vorratsbehälter zu lagern. Dies ist insbesondere dann von Vorteil, wenn es sich bei der Gülle im ersten Vorratsbehälter um eine vergleichsweise dünnflüssige, niedrig konzentrierte Güllemischung handelt.

Neben Düngemittel oder Wasser können in dem zumindest zweiten Vorratsbehälter oder in weiteren Vorratsbehältern zusätzlich auch Additive vorrätig gehalten werden. Absorptiv wirkende Additive, wie beispielsweise Tonminerale, können der Gülle aus dem ersten Vorratsbehälter mithilfe der Analyse-Misch-Vorrichtung beigemischt werden, insbesondere um Geruchsstoffe zu binden. Säurehaltige Additive können den pH-Wert der Gülle senken und dadurch Verluste von Stickstoff und zudem Geruchsbelästigungen durch Ausgasung des flüchtigen Ammoniaks verhindern.

Die erfindungsgemäße Analyse-Misch-Vorrichtung umfasst in einer Weiterbildung einen zweiten Vorratsbehälter für Gülle sowie eine zweite Fördereinrichtung zum Fördern der Gülle in eine Mischkammer. Dies ist insbesondere für landwirtschaftliche Großbetriebe vorteilhaft, da die Bereitstellung einer Güllemischung mit einer vorbestimmten chemischen Zusammensetzung durch die Mischung von zwei unterschiedlichen Güllen und gegebenenfalls eines Feststoffs und/oder einer Flüssigkeit erfolgen kann.

Das sich in Senkgruben oder anderen Güllevorratsbehälter oft Sink- und Schwimmschichten bilden ist in einer bevorzugten Ausführungsform der Analyse-Misch-Vorrichtung die erste Fördereinrichtung zum Fördern der Gülle verschieblich ausgeführt. So kann ein Saugrohrje nach Bedarf tiefer oder weniger tief in den Güllevorratsbehälter eintauchen, um die chemische Zusammensetzung der geförderten Gülle zu verändern. In der Regel wird in einer Schwimmschicht die Konzentration an Düngemitteln geringer sein als in einer Sinkschicht, so dass im Wechsel zwischen den Schichten gefördert wird, oder aber im ersten Fall Düngemittel und im zweiten Fall Wasser beigemischt werden muss. Um die beizumischenden Menge und/oder das Volumen eines Feststoffs, einer Suspension oder einer Flüssigkeit möglichst gering zu halten, ist es auch denkbar, dass die erste Fördereinrichtung zum Fördern der Gülle zumindest zwei Saugrohre umfasst, die unterschiedlich tief in den Vorratsbehälter für Gülle eintauchen. Dadurch lässt sich in vorteilhafter Weise die Gülle im ersten Vorratsbehälter exakter analysieren, und demnach die beizumischende Menge eines Feststoffs oder einer Flüssigkeit minimieren. Selbstverständlich ist es auch möglich, eine homogenisierte Gülle zu fördern, die in der Regel die besten Analysedaten liefert.

Die erfindungsgemäße Analyse-Misch-Vorrichtung wird nachfolgend anhand eines Beispiels näher erläutert:
Eine Düngebedarfsermittlung ergibt, dass der Nährstoffbedarf für ein pflanzenbaulich genutztes Ackerland 80 kg Stickstoff, 40 kg Phosphor und 30 kg Kalium pro Hektar (ha) beträgt. Ein Sensor zur kontinuierlichen chemischen Analyse der Gülle auf dem Förderweg aus dem Vorratsbehälter der Gülle in eine Mischkammer misst 4 kg Stickstoff, 3 kg Phosphor und 2 kg Kalium pro Kubikmeter (cbm) geförderte Gülle. Für eine typische Ausbringmenge von 15 cbm/ha würden sich folgende Werte ergeben: 60 kg Stickstoff, 45 kg Phosphor und 30 kg Kalium. Der chemischen Zusammensetzung der bereitgestellten Güllemischung fehlen demnach 20 kg N/ha, so dass der Güllemischung über die zweite Fördereinrichtung 1,3 kg N/cbm zugegeben werden muss; Kalium entspricht der geforderten Menge, wohingegen der Wert an Phosphor um 5 kg/ha überschießt. Dem überschießenden Phosphorwert kann entweder entgegengewirkt werden, indem die Güllemischung mit Wasser verdünnt wird, und entsprechend Stickstoff und Kalium zugesetzt wird, oder aber in dem der Wert in der Jahresbilanz - Höchstmenge (kg) pro Hektar (ha) und Jahr (a) - bei nachfolgenden Düngungen berücksichtigt wird.

Nach der Bereitstellung einer Güllemischung mit einer vorbestimmten chemischen Zusammensetzung kann der Dünger ausgebracht werden. Hierbei zeigen sich auch die Vorteile der Erfindung, da lediglich die Fahrgeschwindigkeit des landwirtschaftlichen Geräts und die jeweilige Arbeitsbreite zu berücksichtigen sind; d.h., die zum Verteiler des landwirtschaftlichen Geräts geförderte Menge an Gülle ist lediglich in Abhängigkeit der Fahrgeschwindigkeit und der jeweiligen Arbeitsbreite zu regeln.

Das Prinzip der Erfindung wird im Folgenden anhand von zwei Zeichnungen beispielshalber noch näher erläutert. In den Zeichnungen zeigen:
- Figur 1:: eine schematische Ansicht einer ersten Analyse-Misch-Vorrichtung,
- Figur 2: ein Untersuchungsergebnis einer Gülle und
- Figur 3:: eine schematische Ansicht einer zweiten Analyse-Misch-Vorrichtung.

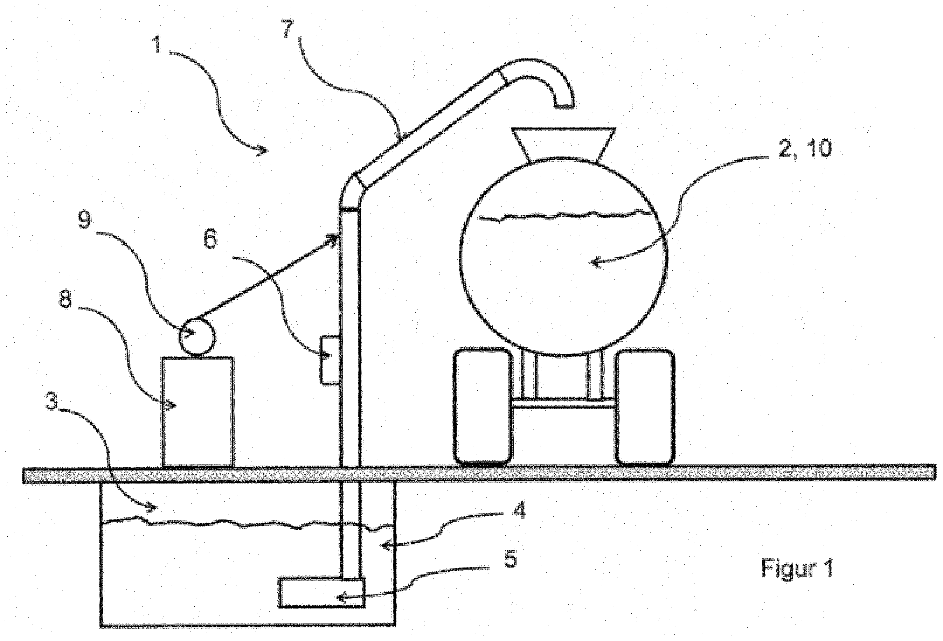

Figur 1 zeigt eine erfindungsgemäße Analyse-Misch-Vorrichtung (1) mit einem Güllefass (2) als Gülleausbringfahrzeug oder als reines Transportfahrzeug. In der Güllegrube (3) befindet sich eine nicht näher spezifizierte Güllemischung (4) als komplexes Mehrphasensystem mit einer unbekannten chemischen Zusammensetzung. Durch die Bildung von Sink- und Schwimmschichten kann sich die Güllemischung (4) auch in Bezug auf die jeweilige Förderhöhe unterscheiden.

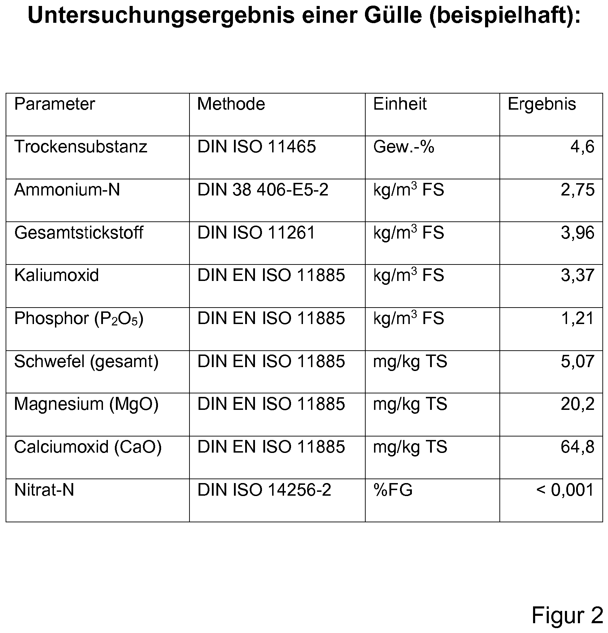

Über die Pumpe (5) wird die Gülle in das Güllefass (2) gefördert. In dieser Ausführungsform dient das Güllefass (2) als Mischkammer. Der Sensor (6), beispielsweise ein NIR- oder RAMAN-Sensor, ist ausgebildet und eingerichtet, um die auf dem Förderweg (7) zu der Mischkammer (2) geförderte Gülle kontinuierlich oder diskret zu analysieren. Figur 2 zeigt tabellarisch das Untersuchungsergebnis einer Gülle.

In dem Vorratsbehälter (8) befindet sich ein Feststoff, eine Flüssigkeit oder Suspension, der bzw. die über eine geeignete Fördereinrichtung (9), beispielsweise eine Pumpe oder eine pneumatisch betriebene Vorrichtung, beispielsweise ein Gebläse, in die Mischkammer (2) gefördert werden kann. Über eine Recheneinrichtung (nicht in der Figur) wird die beizumischenden Menge bzw. das beizumischenden Volumen berechnet, um eine Güllemischung (10) mit einer vorbestimmten chemischen Zusammensetzung bereitzustellen. Das Beimischen kann dabei manuell oder automatisiert über eine Steuereinrichtung, die in Wirkverbindung mit der Recheneinrichtung steht, erfolgen.

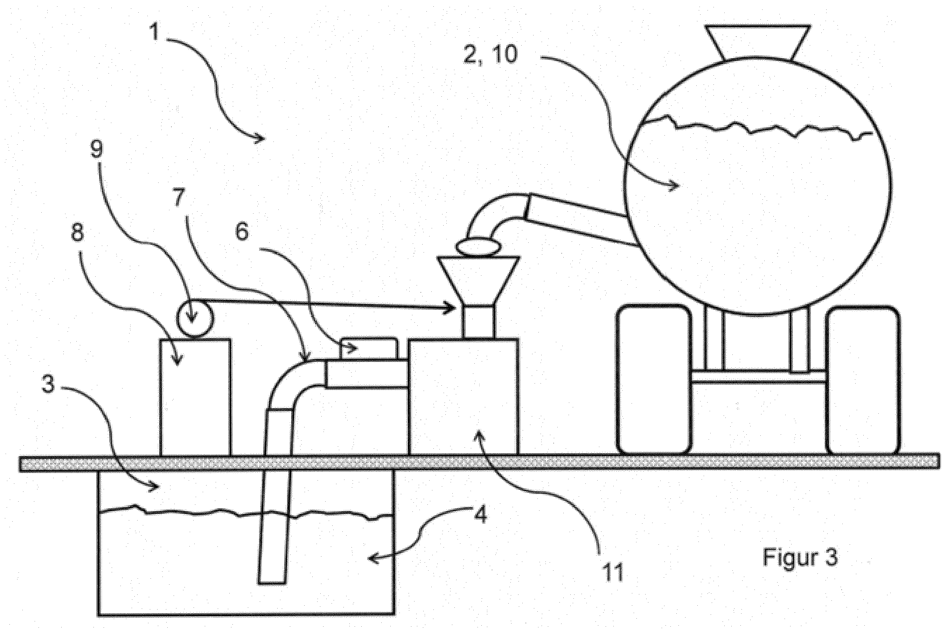

Die in Figur 3 gezeigte Analyse-Misch-Vorrichtung (1) unterscheidet sich von der in Figur 1 gezeigten Vorrichtung durch die Fördereinrichtung zum Fördern der Gülle in eine Mischkammer (2). Hierbei handelt es sich um eine Absaugstation (11), die die Gülle (4) aus der Güllegrube (3) absaugt. Das Absaugen bzw. das Fördern der Gülle (4) in die Mischkammer (2) erfolgt über Vakuumtechnik. So kann es sich bei dem Güllefahrzeug um einen so genannten Vakuumtankwagen handeln. Mittels des Sensors (6) wird die geförderte Gülle (4) analysiert, um anhand der Analysedaten eine beizumischende Menge und/oder ein beizumischendes Volumen eines Feststoffs, einer Suspension oder einer Flüssigkeit zur Bereitstellung einer Güllemischung (10) mit einer vorbestimmten chemischen Zusammensetzung zu berechnen. Die Fördereinrichtung (9) ist geeignet, einen Feststoff oder eine Flüssigkeit aus dem Vorratsbehälter (8) in die Mischkammer (2) zu fördern.

Bei den beiden vorstehend beschriebenen Analyse-Misch-Vorrichtungen handelt es sich um detaillierte Ausführungsformen, die in üblicher Weise vom Fachmann modifiziert werden können. So kann eine erfindungsgemäße Vorrichtung je nach Bedarf mehrere Vorratsbehälter (8, 8', 8") mit geeigneten Fördereinrichtung (9, 9', 9") umfassen, um eine Güllemischung (10) mit einer vorbestimmten chemischen Zusammensetzung im Hinblick auf weitere Inhaltsstoffe, wie beispielsweise Natrium, Kalium, Magnesium, Calcium, Eisen etc. bereitstellen zu können.

Selbstverständlich kann auch die Anordnung und Form der Mischkammer (2) variabel gestaltet sein, wenn sichergestellt ist, dass die Güllemischung (10) mit der vorbestimmten chemischen Zusammensetzung zeitnah nach deren Bereitstellung auf das Feld bzw. auf das pflanzenaulich genutzte Ackerland ausgebracht wird.

Daraus ergeben sich auch die Vorteile der Erfindung, die insbesondere in dem vollständigen Erhalt des in der Gülle enthaltenen Stickstoffs liegen, aber auch, dass die Gülle mittels Brauch- und/oder Abwasser in eine pflanzenverträglichere Form gebracht werden kann und die Möglichkeit der Verringerung der durch die Gülle hervorgerufenen Geruchsbelästigung besteht. Der wesentliche Vorteil liegt jedoch darin, dass ohne komplizierte und störanfällige Regelungstechnik an und/oder in dem Gülleausbringfahrzeug Gülle mit einer vorbestimmten chemischen Zusammensetzung auf landwirtschaftlich genutzte Bodenflächen ausgebracht werden kann.

### Bezugszeichenliste:

- 1: Analyse-Misch-Vorrichtung
- 2: Güllefass / Mischkammer
- 3: Güllegrube
- 4: Gülle
- 5: Pumpe
- 6: Sensor
- 7: Förderweg
- 8: Vorratsbehälter
- 9: Fördereinrichtung
- 10: Güllemischung
- 11: Absaugstation

## Patentansprüche

1. Analyse-Misch-Vorrichtung (1) zur Bereitstellung einer Güllemischung (10) mit einer vorbestimmten chemischen Zusammensetzung umfassend einen ersten Vorratsbehälter (3) für Gülle (4), eine erste Fördereinrichtung (5) zum Fördern der Gülle (4) in eine Mischkammer (2), zumindest einen zweiten Vorratsbehälter (8) für einen beizumischenden Feststoff, eine beizumischende Flüssigkeit oder Suspension, weitere Vorratsbehälter (8, 8', 8") für weitere beizumischende Feststoffe, und eine zweite Fördereinrichtung (9) zum Fördern des Feststoffs, der Flüssigkeit oder Suspension in die Mischkammer (2), **gekennzeichnet durch** einen Sensor (6) zur kontinuierlichen oder diskreten chemischen Analyse der Gülle (4) auf dem Förderweg (7) zu der Mischkammer (2) und eine Recheneinrichtung zur Berechnung der beizumischenden Menge und/oder des Volumens eines Feststoffs, einer Suspension oder einer Flüssigkeit anhand von Analysedaten des Sensors (6), und **dadurch, dass** sich in dem zumindest einen zweiten Vorratsbehälter (8) und den weiteren Vorratsbehältern (8, 8', 8") je ein Feststoff zum Beimischen befindet, der Stickstoff, Phosphor oder Kalium, insbesondere in Form ihrer Salze, oder einen Voll- oder Mehrnährstoffdünger, umfasst.

2. Analyse-Misch-Vorrichtung (1) nach Anspruch 1, **dadurch gekennzeichnet, dass** die Mischkammer eine Gülle- oder Senkgrube, ein Güllefass, ein Gülleausbringfahrzeug oder ein Gülletransportfahrzeug ist.

3. Analyse-Misch-Vorrichtung (1), nach Anspruch 1 oder 2, **gekennzeichnet durch** eine Homogenisierungseinrichtung in dem Vorratsbehälter (3) für Gülle (4).

4. Analyse-Misch-Vorrichtung (1) nach einem der vorstehenden Ansprüche, **gekennzeichnet durch** eine Steuereinrichtung zur automatisierten Steuerung der zweiten Fördereinrichtung (9) zum Fördern des Feststoffs, der Flüssigkeit oder Suspension in die Mischkammer (2).

5. Analyse-Misch-Vorrichtung (1) nach einem der vorstehenden Ansprüche, **gekennzeichnet durch** einen Durchflussmesser in dem Förderweg (7).

6. Analyse-Misch-Vorrichtung (1) nach einem der vorstehenden Ansprüche, **dadurch gekennzeichnet dass** die weiteren Vorratsbehälter (8, 8', 8") je weitere beizumischende Flüssigkeiten oder Suspensionen enthalten und/oder **gekennzeichnet durch** einen weiteren Vorratsbehälter (3') für Gülle (4').

7. Analyse-Misch-Vorrichtung (1) nach einem der vorstehenden Ansprüche, **gekennzeichnet durch** eine eine verschiebliche Rohrleitung umfassende erste oder weitere Fördereinrichtung (5) zum Fördern der Gülle (4) in eine Mischkammer (2).

8. Verwendung einer Analyse-Misch-Vorrichtung (1) nach einem der Ansprüche 1 bis 7 zur Bereitstellung einer Güllemischung (10) mit einer vorbestimmten chemischen Zusammensetzung.

## Claims

1. Analysing and mixing device (1) for providing a liquid-manure mixture (10) having a predetermined chemical composition, comprising a first reservoir (3) for liquid manure (4), a first conveying apparatus (5) for conveying the liquid manure (4) into a mixing chamber (2), at least one second reservoir (8) for a solid to be added, or a liquid or suspension to be added, further reservoirs (8, 8', 8") for further solids to be added, and a second conveying apparatus (9) for conveying the solid, the liquid or suspension into the mixing chamber (2), **characterized by** a sensor (6) for the continuous or discrete chemical analysis of the liquid manure (4) on the conveying path (7) to the mixing chamber (2), and a computing apparatus for calculating the amount to be added, and/or the volume, of a solid, a suspension or a liquid on the basis of analysis data from the sensor (6), and in that, in the at least one second reservoir (8) and the further reservoirs (8, 8', 8"), there is in each case a solid for adding, the solid comprising nitrogen, phosphorus or potassium, in particular in the form of their salts, or a complete fertilizer or compound fertilizer.

2. Analysing and mixing device (1) according to Claim 1, **characterized in that** the mixing chamber is a liquid-manure pit or cesspit, a liquid-manure tank, a liquid-manure discharging vehicle or a liquid-manure transporting vehicle.

3. Analysing and mixing device (1) according to Claim 1 or 2, **characterized by** a homogenization apparatus in the reservoir (3) for liquid manure (4).

4. Analysing and mixing device (1) according to one of the preceding claims, **characterized by** a control apparatus for automated control of the second conveying apparatus (9) for conveying the solid, the liquid or suspension into the mixing chamber (2).

5. Analysing and mixing device (1) according to one of the preceding claims, **characterized by** a flowmeter in the conveying path (7).

6. Analysing and mixing device (1) according to one of the preceding claims, **characterized in that** the further reservoirs (8, 8', 8") each contain further liquids or suspensions to be added, and/or **characterized by** a further reservoir (3') for liquid manure (4').

7. Analysing and mixing device (1) according to one of the preceding claims, **characterized by** a first or further conveying apparatus (5), which comprises a displaceable pipe, for conveying the liquid manure (4) into a mixing chamber (2).

8. Use of an analysing and mixing device (1) according to one of Claims 1 to 7 for providing a liquid-manure mixture (10) with a predetermined chemical composition.

## Revendications

1. Dispositif (1) d'analyse et de mélange pour la préparation d'un mélange de lisier (10) ayant une composition chimique prédéterminée, comprenant un premier récipient de stockage (3) pour le lisier (4), un premier dispositif de transport (5) pour le transport du lisier (4) dans une chambre de mélange (2), au moins un deuxième récipient de stockage (8) pour une matière solide à mélanger, un liquide ou une suspension à mélanger, d'autres récipients (8, 8', 8'') pour d'autres matières solides à mélanger, et un deuxième dispositif de transport (9) pour transporter la matière solide, le liquide ou la suspension dans la chambre de mélange (2), **caractérisé par** un capteur (6) pour une analyse chimique continue ou discrète du lisier (4) sur le chemin de transport (7) vers la chambre de mélange (2) et par un dispositif de calcul pour calculer la quantité et/ou le volume d'une matière solide, d'une suspension ou d'un liquide à ajouter à l'aide des données d'analyse du capteur (6), et en ce que dans ledit au moins un deuxième récipient (8) et les autres récipients (8, 8', 8'') se trouve respectivement une substance solide à mélanger, qui comprend de l'azote, du phosphore ou du potassium, en particulier sous la forme de leurs sels, ou un engrais complet ou à plusieurs éléments nutritifs.

2. Dispositif d'analyse-mélange (1) selon la revendication 1, **caractérisé en ce que** la chambre de mélange est une fosse à lisier ou une fosse de décantation, une tonne à lisier, un véhicule d'épandage de lisier ou un véhicule de transport de lisier.

3. Dispositif d'analyse-mélange (1), selon la revendication 1 ou 2, **caractérisé par** un dispositif d'homogénéisation dans le récipient (3) pour le lisier (4) .

4. Dispositif (1) d'analyse et de mélange selon l'une des revendications précédentes, **caractérisé par** un dispositif de commande pour la commande automatisée du deuxième dispositif de transport (9) pour le transport de la matière solide, du liquide ou de la suspension dans la chambre de mélange (2).

5. Dispositif (1) d'analyse et de mélange selon l'une des revendications précédentes, **caractérisé par** un débitmètre dans le chemin de transport (7).

6. Dispositif (1) d'analyse et de mélange selon l'une des revendications précédentes, **caractérisé en ce que** les autres récipients (8, 8', 8'') contiennent chacun d'autres liquides ou suspensions à mélanger et/ou **caractérisé par** un autre récipient (3') pour le lisier (4').

7. Dispositif (1) d'analyse et de mélange selon l'une des revendications précédentes, **caractérisé par** un premier ou un autre dispositif de transport (5) comprenant une tuyauterie mobile pour transporter le lisier (4) dans une chambre de mélange (2).

8. Utilisation d'un dispositif d'analyse-mélange (1) selon l'une des revendications 1 à 7 pour fournir un mélange de lisier (10) ayant une composition chimique prédéterminée.
